(19) **Europäisches Patentamt**
**European Patent Office**
**Office européen des brevets**

(11) **EP 2 073 044 B1**

(12) **FASCICULE DE BREVET EUROPEEN**

(45) Date de publication et mention
de la délivrance du brevet:
**30.11.2011 Bulletin 2011/48**

(51) Int Cl.:
*G02B 1/10* (2006.01)          *G02C 7/02* (2006.01)
*B29D 11/00* (2006.01)

(21) Numéro de dépôt: **09004356.3**

(22) Date de dépôt: **02.03.2001**

(54) **Finissage d'une lentille ophtalmique par étalement de vernis par force centrifuge**

Endbearbeitung einer ophthalmischen Linse durch Rotationsbeschichtung von Lack

Ophthalmic lens finishing by varnish spread through spin coating

(84) Etats contractants désignés:
**AT BE CH CY DE DK ES FI FR GB GR IE IT LI LU MC NL PT SE TR**

(30) Priorité: **06.03.2000 FR 0002848**

(43) Date de publication de la demande:
**24.06.2009 Bulletin 2009/26**

(62) Numéro(s) de document de la (des) demande(s) initiale(s) en application de l'article 76 CBE:
**01911834.8 / 1 175 630**

(73) Titulaire: **Essilor International (Compagnie Générale D'Optique) 94220 Charenton le Pont (FR)**

(72) Inventeurs:
• **Tardieu, Pascale 75011 Paris (FR)**
• **Robert, Anne 94440 Villecresnes (FR)**
• **Valeri, Robert Alan US-Tampa Florida 33629 (US)**
• **Oliver, Kimberly Denise US-St Petersburg Florida 33711 (US)**

• **Johnson, Eric Glen US-Lakeland Florida 33809 (US)**
• **White Jr, Sidney Shaw US-North Seminole Florida 33772 (US)**
• **Dang, Hoa Thien Tampa Florida 33626 (US)**

(74) Mandataire: **Lepelletier-Beaufond, François Santarelli 14 avenue de la Grande-Armée 75017 Paris (FR)**

(56) Documents cités:
**WO-A-98/57757      US-A- 4 417 790**
**US-A- 5 246 728      US-A- 5 459 176**
**US-A- 5 619 288**

• **BORNSIDE D E ET AL: "ON THE MODELING OF SPIN COATING" JOURNAL OF IMAGING TECHNOLOGY, SOC. FOR IMAGING SCIENCE AND TECHNOLOGY, SPRINGFIELD, VA, US, vol. 13, no. 4, 1 janvier 1987 (1987-01-01), pages 122-130, XP000907670**

**Description**

La présente invention concerne de manière générale le finissage des lentilles ophtalmiques, plus communément appelées verres, à monter sur des montures de lunettes.

Elle vise plus particulièrement un procédé de finissage d'une surface d'une lentille ophtalmique, pour l'adapter à une prescription donnée.

La réalisation de lentilles ophtalmiques se fait habituellement en deux temps.

Dans un premier temps, il est procédé à la réalisation de la lentille semi-finie. Cette lentille semi-finie, obtenue par moulage; présente généralement une surface sphérique, asphérique ou multifocale progressive. L'autre surface qui est sphérique est destinée à être traitée afin d'adapter la lentille aux besoins du porteur.

Dans un deuxième temps, il est procédé, à la demande, au traitement de cette surface sphérique en assurant, au coup par coup, par reprise d'usinage, l'ajustement de corrections nécessaires pour satisfaire à la prescription requise, tant en ce qui concerne la puissance qu'en ce qui concerne éventuellement d'autres types de corrections, tels que, par exemple, la réalisation d'un cylindre si le porteur concerné est astigmate.

L'ébauche de la surface est réalisée au moyen de machines d'usinage rapides. Il subsiste, pour la surface, après cette première étape, des traces d'outil qu'il est nécessaire de supprime. La surface usinée passe ainsi par un poste de doucissage et un poste de polissage.

Ces différentes étapes nécessitent des équipements spécifiques et un grand nombre d'outils. En effet, aux étapes de doucissage et de polissage, il est nécessaire d'adapter la forme des outils à la surface à traiter, afin de ne pas trop déformer la surface usinée et de respecter ainsi les courbures aux différents points de la surface.

Le procédé ainsi mis en oeuvre est à la fois coûteux en temps et d'un prix de revient élevé.

Afin de réduire le temps de finissage et donc le coût de fabrication de telles lentilles ophtalmiques, il a été proposé dans le document US 4 417 790 un procédé de finissage selon lequel on réalise un vernissage de la surface usinée, non doucie et non polie, pour obtenir une surface présentant une qualité optique acceptable.

Selon ce document, l'épaisseur de la couche de vernis appliquée sur ladite surface est de l'ordre de 10 Ra, où Ra est la rugosité moyenne arithmétique de la surface usinée.

Toutefois, ce procédé ne donne pas entière satisfaction du point de vue cosmétique et ne permet pas d'éliminer tous les défauts de la surface, certains restant visibles à la lampe à arc.

Par rapport à l'état de la technique précité, la présente invention propose un nouveau procédé rapide et permettant d'obtenir une lentille finie de très bonne qualité optique qui répond aux exigences cosmétiques.

Particulièrement, l'invention propose un procédé selon la revendication 1. Ainsi, avantageusement, selon l'invention, l'épaisseur de la couche de vernis permet d'éliminer tous les défauts de la surface de la lentille ophtalmique, qui présente alors une très bonne qualité optique.

Préférentiellement, selon l'invention, l'épaisseur de la couche de vernis déposée sur ladite surface est comprise entre environ 100 Ra et 800 Ra, préférentiellement comprise entre 500 Ra et 800 Ra.

Selon une caractéristique du procédé conforme à l'invention, la couche de vernis est obtenue par durcissement d'une composition liquide de vernis qui présente une viscosité à 25°C comprise entre environ 1000 et 3000 mPas.

La couche de vernis présente avantageusement un indice de réfraction sensiblement égal à celui de la lentille avec une tolérance de $\pm$ 0,01.

Ainsi, avantageusement, selon l'invention, la couche de vernis déposée sur la surface de la lentille et la lentille forment un seul dioptre, cette lentille répondant alors aux exigences du point de vue cosmétique puisqu'elle ne présente pas d'une part d'irisation visible à l'interface substrat-vernis et d'autre part de défauts observables en transmission, à la lampe à arc.

Avantageusement, selon un mode de réalisation de l'invention, la couche de vernis est déposée directement sur la surface usinée. Les étapes de doucissage et de polissage sont supprimées. Ce mode de réalisation est particulièrement avantageux dans le cas de la réalisation d'une surface relativement simple comme les surfaces sphériques ou toriques.

Dans un autre mode de réalisation, la couche de vernis est déposée après l'étape de doucissage. Ce mode de réalisation est plus particulièrement adapté dans le cas de surfaces dites complexes telles que par exemple des surfaces atoriques ou multifocales progressives.

L'invention est particulièrement avantageuse dans la mesure où elle permet à la fois le traitement de surfaces relativement simples et de surfaces complexes. Elle permet de diminuer le nombre de machines nécessaires et surtout de diminuer de façon drastique le nombre d'outils, ce qui facilite la gestion des procédés de production.

L'invention permet en outre de diminuer les temps de production. A titre d'exemple les temps moyens nécessaires aux différentes étapes des procédés sont les suivants

| Procédé classique | Ebauche | 2 min |
| --- | --- | --- |

(suite)

| | | |
|---|---|---|
| | Douci | 2,5 min |
| | Poli | 10 min |
| | Total | 14,5 min |
| Premier mode de réalisation du procédé selon l'invention (sans douci) : | Ebauche | 2 min |
| | Dépôt de vernis | 1 min |
| | Temps de repos | 2 min |
| | Polymérisation vernis | 1 min |
| | Total | 6 min |
| Deuxième mode de réalisation du procédé selon l'invention (avec douci) : | Ebauche | 2 min |
| | Douci | 4,5 min |
| | Dépôt de vernis | 1 min |
| | Temps de repos | 2 min |
| | Polymérisation vernis | 1 min |
| | Total | 10,5 min |

Le procédé selon l'invention permet donc d'assurer le finissage d'une lentille quelle que soit la prescription.

Le procédé de l'invention permet une plus grande flexibilité et des temps de cycle plus courts.

Par ailleurs, la composition liquide de vernis utilisée dans le procédé selon l'invention peut présenter une formulation du type acrylique ou du type époxy.

L'invention propose avantageusement que le procédé précité comporte l'étape de mettre en oeuvre une machine d'application du vernis, comportant un support de la lentille pouvant être entraîné en rotation et un bras portant une buse de distribution à faible pression du vernis liquide, déplaçable en translation verticalement et horizontalement par rapport au support.

Préférentiellement, la buse de distribution présente une pression de distribution de l'ordre de $0,7.10^5$ Pa.

La description qui va suivre en regard des dessins annexés, donnés à titre d'exemples non limitatifs, fera bien comprendre en quoi consiste l'invention et comment elle peut être réalisée.

Sur les dessins annexés :

- les figures 1 et 2 représentent les organigrammes de deux modes de réalisation respectivement du procédé selon l'invention et d'un procédé alternatif de finissage d'une lentille ophtalmique ;
- la figure 3 est une vue schématique de principe d'une installation de mise en oeuvre du procédé selon l'invention ; et
- la figure 4 est une vue en coupe longitudinale d'une lentille ophtalmique obtenue par le procédé selon l'invention.

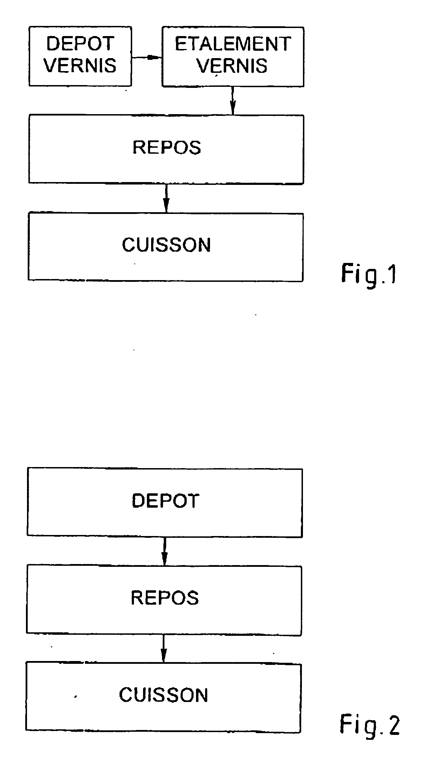

Sur les figures 1 et 2, on a représenté les étapes principales d'un procédé de finissage d'une surface d'une lentille ophtalmique à une prescription donnée.

Cette surface présente ici une rugosité moyenne arithmétique Ra inférieure à 0,5 $\mu$m, et préférentiellement comprise entre 0,05 et 0,06 $\mu$m.

Selon ce procédé, dans une première étape, on dépose sur ladite surface une couche de vernis sur une épaisseur comprise entre environ 30 Ra et 800 Ra, où Ra est la rugosité moyenne arithmétique de cette surface, pour conférer à cette dernière un état de surface poli.

Préférentiellement, l'épaisseur de la couche de vernis déposée sur la surface est comprise entre environ 100 Ra et 800 Ra et plus préférentiellement entre 500 Ra et 800 Ra.

Pour déterminer la rugosité moyenne arithmétique Ra de la surface, il est avantageusement utilisé un profilomètre/rugosimètre FTS (Form Talysurf Series) commercialisé notamment par la Société TAYLOR HOBSON.

Cet appareil comporte une tête laser (par exemple une tête ayant la référence 112/2033-308), un palpeur (référence 112/1836) de longueur 70 mm muni d'une tête sphéro-conique de rayon 2 mm.

Cet appareil mesure, dans le plan de coupe choisie, un profil en deux dimensions. L'acquisition du profil, dans le présent cas est réalisée sur 10 mm, ce qui permet d'obtenir une courbe Z = f (x).

De ce profil on peut extraire différentes caractéristiques de surface et notamment forme, ondulation et rugosité.

Ainsi, pour déterminer la rugosité Ra, le profil subit deux traitements différents, le retrait de la forme et un filtrage qui correspond au retrait de la ligne moyenne.

Les différentes étapes pour déterminer un tel paramètre Ra sont donc les suivantes :

- acquisition du profil Z = f (x),

- retrait de la forme,
- filtrage (retrait de la ligne moyenne), et
- détermination du paramètre Ra.

L'étape d'acquisition du profil consiste à déplacer sur la surface de la lentille en question, le stylet de l'appareil précité qui enregistre les attitudes Z de la surface en fonction du déplacement X.

Lors de l'étape de retrait de la forme, le profil obtenu à l'étape précédente est rapporté à une sphère idéale, c'est-à-dire une sphère pour laquelle les écarts de profil par rapport à cette sphère sont minimaux. Le mode choisi ici est LS arc, retrait du meilleur arc de cercle.

Cela permet d'obtenir ainsi une courbe représentative des caractéristiques du profil de la surface en termes d'ondulation et de rugosité.

L'étape de filtrage permet de ne conserver que les défauts correspondant à certaines longueurs d'onde. En l'occurrence, on cherche à exclure les ondulations, défauts dont les longueurs d'onde sont plus élevées que les longueurs d'onde des défauts dus à la rugosité. Le filtre est ici du type Gaussien, la coupure utilisée est de 0,08 mm.

A partir de la courbe obtenue, la rugosité moyenne arithmétique Ra est déterminée selon la formule suivante :

$$Ra = \frac{1}{N} \sum_{n=1}^{N} |Z_n|$$

où $Z_n$ est, pour chaque point, l'écart algébrique Z, par rapport à la ligne moyenne calculée au filtrage.

Selon le mode de réalisation représenté sur la figure 1, la dépose du vernis s'effectue sur la surface à l'arrêt, en une seule fois, la quantité déterminée de vernis étant placée au centre de la surface de la lentille. Puis on étale le vernis par centrifugation.

Cette centrifugation du vernis est réalisée à une vitesse de rotation de la lentille comprise entre 300 et 1000 tr/min et préférentiellement égale à environ 500 tr/min. L'étape de centrifugation présente une durée d'environ 10 secondes.

Selon le mode de réalisation représenté sur la figure 2, le dépôt et l'étalement du vernis sur la lentille s'effectuent simultanément, en déposant le vernis sur ladite surface selon un déplacement de la buse du centre vers le bord de la lentille. Ce dépôt en spirale du vernis sur la surface est réalisé à une vitesse de rotation de la lentille comprise entre 300 et 1000 tr/min.

La vitesse de rotation de la lentille est contrôlée de manière à conserver un maximum de vernis.

Le dépôt de la couche de vernis sur la surface de la lentille est réalisé à une température ambiante (comprise entre 25 et 30°C).

Après le dépôt et l'étalement du vernis, on procède à la tension de ce dernier, en entraînant ladite lentille à une vitesse de rotation supérieure à 1000 tr/min, pendant une durée d'environ 50 secondes, en maintenant une température ambiante (comprise entre 25 et 30°C).

Puis on met au repos le vernis pendant une durée qui peut atteindre 2 à 4 minutes.

Après l'étape de repos, le vernis est réticulé par photopolymérisation au rayonnement ultraviolet.

Avantageusement, selon ce procédé, on utilise une composition liquide de vernis, qui présente une viscosité à 25°C comprise entre environ 1000 et 3000 mPas, ce qui facilite l'étalement et la tension du vernis sur la surface de la lentille.

Au cours des différentes étapes du procédé, il est important de contrôler la viscosité de la composition liquide de vernis mise en oeuvre, pour contrôler l'épaisseur de vernis déposée sur la surface et obtenir en définitive une surface de lentille présentant une bonne qualité optique.

En outre, le vernis une fois polymérisé présente un indice de réfraction sensiblement égal à celui de la lentille avec une tolérance de $\pm$ 0,01, de façon à ce que la couche de vernis et le substrat que constitue la lentille forment un seul dioptre. Cela permet à la lentille de répondre aux exigences cosmétiques, du fait qu'il n'y a pas d'irisation visible à l'interface substrat-vernis et pas de défauts observables en transmission à la lampe à arc.

La lampe utilisée pour le contrôle d'aspect de la lentille après le finissage est une lampe à décharge à vapeur de mercure.

La boîte à lumière et le boîtier d'alimentation sont de la marque EUROSEP. La lampe est de marque OSRAM, référence HBO 100 W/2.

La composition de vernis utilisée peut présenter une formulation de type acrylique à base de polyuréthane.

Par exemple, elle peut comporter :

- un monomère de type polyacrylate ou poly(méth)acrylate, et éventuellement un (méth)acryloxysilane, ou

- un monomère à fonction(s) époxy ou leurs mélanges.

Par exemple, pour une lentille ophtalmique qui présente un indice de réfraction inférieur ou égal à 1,55, et préférentiellement de l'ordre de 1,50, la composition du vernis peut comprendre au moins un monomère polyacrylate ou au moins un monomère à fonction(s) époxy. Dans ce cas :

- elle comprend avantageusement un mélange de monomères diacrylate et triacrylate ;
- le monomère diacrylate comprend un polyester uréthane diacrylate aliphatique ;
- le monomère triacrylate est choisi parmi le triméthylolpropane éthoxylétriacrylate et le pentaerythritol triacrylate ; et/ou
- le ratio en poids diacrylate/triacrylate varie de 50/50 à 40/60.

Par exemple, elle peut aussi comprendre un mélange d'un monoacryloxysilane et d'un polyacrylate. Le polyacrylate comprend préférentiellement le dipentaerythritol pentaacrylate.

Elle comprend en outre de la silice colloïdale.

Selon une autre variante, pour une lentille ophtalmique qui présente un indice de réfraction supérieur à 1,55, et préférentiellement de l'ordre de 1,590, par exemple constituée d'un polymère à base de polycarbonate de bisphénol A, de préférence la composition de vernis utilisée comprend un oligomère époxyacrylate halogéné et préférentiellement bromé et peut comprendre en outre un monomère acrylate d'indice inférieur d'au moins 0,1 par rapport à celui de l'époxyacrylate halogéné.

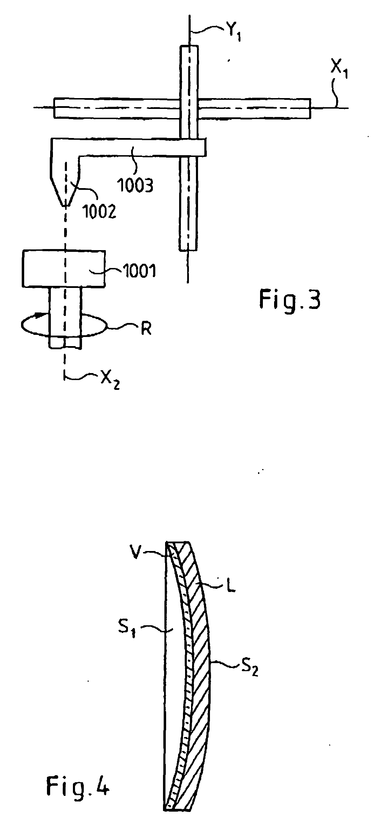

Sur la figure 3 on a représenté une machine d'application du vernis, qui comprend un support 1001 de la lentille pouvant être entraîné en rotation autour d'un axe vertical $X_2$, et un bras 1003 portant une buse de distribution à faible pression 1002 du vernis liquide, déplaçable en translation verticalement selon l'axe $Y_1$ et horizontalement selon $X_1$ par rapport au support.

La buse de distribution 1002 présente une pression de distribution du vernis liquide de l'ordre de $0,7.10^5$ Pa.

Cette machine peut être utilisée pour réaliser les deux modes de réalisation du procédé représentés sur les figures 1 et 2, à savoir le premier mode de réalisation dit statique qui consiste à déposer le vernis en une seule fois sur la lentille arrêtée, puis à étaler ledit vernis par centrifugation, et un troisième mode de réalisation, dit dynamique, qui consiste à déposer le vernis en combinant la rotation de la lentille autour de l'axe $X_2$ et le déplacement du bras 1003 radialement.

Cette machine peut-être utilisée également pour un deuxième mode de réalisation, dit semi-dynamique, qui consiste à déposer le vernis alors que la lentille est entraînée en rotation, la buse étant en position fixe, centrée sur l'axe $X_2$ du support.

Pour réaliser le premier mode de réalisation du procédé représenté sur la figure 1, la buse de distribution à faible pression du vernis liquide est centrée sur l'axe $X_2$ de rotation du support 1001 de la lentille, le support étant arrêté, et elle éjecte en une seule fois une quantité déterminée de vernis au centre de la surface de la lentille ophtalmique. Puis le support 1001 de la lentille est entraîné en rotation autour de l'axe $X_2$ à vitesse lente de façon à provoquer l'étalement du vernis sur la totalité de la surface de la lentille ophtalmique. La vitesse de rotation de la lentille est ajustée de manière à éviter une perte de vernis. Pour ce faire, la vitesse de rotation du support est contrôlée. La vitesse d'entraînement en rotation du support lors de l'étalement de vernis est de l'ordre de 500 tr/min et la durée de la rotation est de l'ordre de 10 secondes.

Pour mettre en oeuvre le troisième mode de réalisation du procédé, le support 1001 de la lentille est entraîné en rotation autour de l'axe $X_2$ et la buse de distribution du vernis est déplacée en translation selon l'axe $X_1$ du centre vers le bord de la lentille ou du bord vers le centre, alors qu'elle éjecte sur la surface de la lentille la quantité prévue de vernis.

La hauteur de chute du vernis est paramétrable en déplaçant le bras 1003 portant la buse 1002 selon l'axe vertical $Y_1$. Toutefois cette hauteur reste fixe pendant le dépôt.

Ce dépôt, appelé communément dépôt dynamique, du vernis sur la surface de la lentille peut s'avérer particulièrement avantageux pour recouvrir des surfaces de lentilles à forte composante torique et/ou à forte concavité.

Lors du dépôt du vernis, la rotation du support 1001 de la lentille est réalisée dans les mêmes conditions que pour la centrifugation.

Enfin, sur la figure 4, on a représenté schématiquement vue en coupe longitudinale une lentille ophtalmique L obtenue par le procédé précité, qui comprend une face avant convexe $S_2$ réalisée par moulage, et une face arrière concave $S_1$ réalisée conformément au procédé précité qui comporte une épaisseur de couche de vernis d'environ 40 $\mu$m.

Cette lentille est avantageusement obtenue selon l'invention par polymérisation d'une composition à base de bis [allycarbonate] de diéthylène glycol.

Cette lentille présente soit un indice de réfraction inférieur ou égal à 1,55, et préférentiellement de l'ordre de 1,50, soit un indice de réfraction supérieur à 1,55, et préférentiellement de l'ordre de 1,590.

Ladite lentille peut être également constituée d'un polymère à base de polycarbonate de bisphénol A.

Quatre exemples vont être explicités ci-après.

Exemple 1

| Composé | Pourcentage en Poids | Fournisseur |
|---------|---------------------|-------------|
| SR 351 | 58,25 | Cray Valley |
| CN 965 | 38,83 | Cray Valley |
| Irgacure 500 | 1,94 | Ciba Geigy |
| Irgacure 184 | 0,97 | Ciba Geigy |
| SR 351 est un triméthylol propane triacrylate. CN 965 est un polyester uréthane diacrylate aliphatique. | | |

Exemple 2

La surface à traiter est obtenue par un procédé selon lequel l'étape d'usinage, réalisée au moyen d'une fraise, est suivie par une étape de lissage. La surface obtenue a une forme quelconque.

Substrat : CR 39
Indice(ne) : 1.502
Ra après usinage : 0.18 $\mu$m
Ra après lissage : 0.06 $\mu$m
Epaisseur vernis : 40 $\mu$m (670 Ra)
Indice vernis 1.50

La composition du vernis a été explicitée dans le détail en référence aux figures 1 à 4.

Exemple 3

La surface réalisée est une sphère ou un tore, elle présente donc une symétrie. Dans le procédé mis en oeuvre dans ce cas, il n'y a pas d'étape de lissage. La machine utilisée, fabriquée par la Société MICRO-OPTICS, est du type de celle décrite dans la demande de brevet WO 98/55261.

Substrat : CR 39
Indice(ne) : 1.502
Ra après usinage : 0,34 $\mu$m
Epaisseur vernis : 10 $\mu$m (30 Ra)
Indice du vernis: 1.495
Composition du vernis :

| Composé | Pourcentage en poids | Fournisseur |
|---------|---------------------|-------------|
| KBM-5103 | 32.35 | Shin-Etsu |
| 1034A (silice colloïdale dans $H_2O$) | 4.38 | Nalco |
| Acétylacétonate d'aluminium | 0.02 | Aldrich |
| 4-hydroxy-4-méthyl-2-pentanone | 24.26 | |
| MA-ST (Silice colloïdale dans méthanol) | 6.47 | Nissan Chemical |

EP 2 073 044 B1

(suite)

| Composé | Pourcentage en poids | Fournisseur |
|---|---|---|
| Ebecryl 265 | 22.50 | Radcure (UCB Chemicals) |
| SR-399 | 8.99 | Sartomer |
| Darocur 1173 | 0.99 | |
| L7602 | 0.02 | Witco |
| L7500 | 0.02 | Witco |

Exemple 4

Même procédé que dans le cas de l'exemple 3, le substrat de la lentille à traiter change, il s'agit du polycarbonate (PC).

Substrat :           PC
Indice(ne) :       1-591
Ra après usinage :   0.05 $\mu$m
Epaisseur vernis :   25 $\mu$m (500 Ra)
Indice du vernis :   1.586
Composition du vernis :

| Composé | Pourcentage en poids | Fournisseur |
|---|---|---|
| RX00841 | 63.014 | Radcure (UCB Chemicals) |
| RX00726 | 23.443 | Radcure (UCB Chemicals) |
| Méthanol | 1.322 | |
| n-Propanol | 1.322 | |
| Glycidoxypropyltriméthoxysilane | 1.821 | Sivento |
| 2-Butanone | 6.169 | |
| Irgacure-500 | 2.644 | Ciba Geigy |
| SLF-18 surfactant | 0.264 | Olin |

Le RX00726 est un mélange d'un oligomère époxy acrylate bromé (60 %) et d'un monomère acrylate (40 %).
Le RX00841 est un mélange des mêmes composés mais dans la proportion 70/30.

**Revendications**

1. Procédé de finissage d'une surface d'une lentille ophtalmique, à une prescription donnée, **caractérisé en ce que** ladite surface présente une rugosité moyenne arithmétique Ra inférieure à 0,5 $\mu$m ; **en ce qu'**on applique sur la surface une couche de vernis d'épaisseur comprise entre environ 30 Ra et 800 Ra, où Ra est la rugosité moyenne arithmétique de ladite surface, pour lui conférer un état de surface poli ; **en ce que** l'on dépose en une seule fois une quantité déterminée de vernis au centre de ladite surface puis on étale le vernis par centrifugation ; **en ce que** la centrifugation du vernis est réalisée à une vitesse de rotation de la lentille comprise entre 300 et 1000 tr/min ; et **en ce que** la couche de vernis est obtenue par durcissement d'une composition liquide de vernis présentant une viscosité à 25°C comprise entre environ 1000 et 3000 mPas.

2. Procédé selon la revendication 1, **caractérisé en ce que** l'épaisseur de la couche de vernis déposée sur ladite surface est comprise entre environ 100 Ra et 800 Ra, préférentiellement comprise entre 500 Ra et 800 Ra.

3. Procédé selon l'une des revendications 1 ou 2, **caractérisé en ce que** ladite surface présente une rugosité moyenne arithmétique Ra comprise entre 0,05 et 0,07μm.

4. Procédé selon l'une des revendications 1 à 3, **caractérisé en ce que** la centrifugation du vernis est réalisée à une vitesse de rotation de la lentille égale à environ 500 tr/min.

5. Procédé selon l'une des revendications 1 à 4, **caractérisé en ce que** le dépôt de la couche de vernis sur ladite surface est réalisé à une température comprise entre 25 et 30°C.

6. Procédé selon l'une des revendications 1 à 5, **caractérisé en ce que** le vernis est réticulé par photopolymérisation au rayonnement ultraviolet.

7. Procédé selon la revendication 6, **caractérisé en ce qu'**avant la réticulation du vernis on met au repos le vernis étalé sur ladite surface pendant une durée pouvant atteindre entre 2 à 4 minutes.

8. Procédé selon la revendication 7, **caractérisé en ce que** la température de l'étape de repos du vernis est comprise entre 25 et 30°C.

9. Procédé selon l'une quelconque des revendications 1 à 8, **caractérisé en ce que** la couche de vernis présente un indice de réfraction sensiblement égal à celui de la lentille avec une tolérance de $\pm$ 0,01.

10. Procédé selon l'une quelconque des revendications précédentes, **caractérisé en ce que** la composition liquide de vernis utilisée comprend :

  - un monomère de type polyacrylate ou poly(méth)acrylate, et éventuellement un (méth)acryloxysilane, ou
  - un monomère à fonction(s) époxy ou leurs mélanges.

11. Procédé selon l'une des revendications 1 à 10, **caractérisé en ce qu'**il comporte l'étape de mettre en oeuvre une machine d'application du vernis, qui comprend un support (1001) de la lentille pouvant être entraîné en rotation et un bras (1003) portant une buse de distribution (1002) à faible pression du vernis liquide, déplaçable en translation verticalement et horizontalement par rapport au support (1001).

12. Procédé selon la revendication 11, **caractérisé en ce** la buse de distribution (1002) présente une pression de distribution de l'ordre de $0,7.10^5$ Pa.

**Claims**

1. Process for finishing a surface of an ophthalmic lens to a given prescription, **characterised in that** said surface has an arithmetic mean roughness Ra of less than 0.5 μm, **in that** a layer of varnish from approximately 30 Ra to approximately 800 Ra thick is applied to the surface, where Ra is the arithmetic mean roughness of said surface, to confer a polished surface state on it, **in that** a defined amount of varnish is deposited all at once at the centre of said surface, the varnish then being spread centrifugally, **in that** the varnish is centrifuged at a lens rotation speed from 300 rpm to 1000 rpm and **in that** the layer of varnish is obtained by hardening a liquid varnish composition having a viscosity at 25°C of from approximately 1000 mPa.s to approximately 3000 mPa.s.

2. Process according to claim 1, **characterised in that** the thickness of the layer of varnish deposited on said surface is from approximately 100 Ra and to approximately 800 Ra and, preferably from 500 Ra to 800 Ra.

3. Process according to either of claims 1 and 2, **characterised in that** said surface has an arithmetic mean roughness Ra from 0.05 μm to 0.07 μm.

4. Process according to one of claims 1 to 3, **characterised in that** the varnish is centrifuged at a lens rotation speed of about 500 rpm.

5. Process according to one of claims 1 to 4, **characterised in that** the layer of varnish is deposited on said surface at a temperature from 25°C to 30°C.

6. Process according to one of claims 1 to 5, **characterised in that** the varnish is crosslinked by photopolymerisation using ultraviolet radiation.

7. Process according to claim 6, **characterised in that** the varnish spread onto said surface is allowed to stand for a period which can reach 2 minutes to 4 minutes before crosslinking the varnish.

8. Process according to claim 7, **characterised in that** the temperature at which the varnish is allowed to stand is between 25 and 30°C.

9. Process according to any one of claims 1 to 8, **characterised in that** the layer of varnish has a refractive index substantially equal to that of the lens, to within a tolerance of $\pm$ 0.01.

10. Process according to any one of the preceding claims, **characterised in that** the liquid varnish composition used includes:

    - a polyacrylate or poly(meth)acrylate type monomer and possibly a (meth)acryloxysilane, or
    - a monomer with epoxy functions or mixtures thereof.

11. Process according to one of claims 1 to 10, **characterised in that** it includes a step of operating a varnish application machine comprising a lens support (1001) that can be rotated and an arm (1003) carrying a distribution nozzle (1002) for distributing the liquid varnish at low pressure, said arm being able to be moved translationally, both vertically and horizontally, relative to the support (1001).

12. Process according to claim 11, **characterised in that** the distribution pressure of the distribution nozzle (1002) is of the order of $0.7 \times 10^5$ Pa.

**Patentansprüche**

1. Endbearbeitungsverfahren einer Fläche einer ophthalmischen Linse bezüglich einer gegebenen Verschreibung, **dadurch gekennzeichnet, dass** die Fläche eine arithmetisch gemittelte Rauigkeit Ra von weniger als 0,5 $\mu$m aufweist; dass man an der Fläche eine Lackschicht einer Dicke enthalten zwischen etwa 30 Ra und 800 Ra anbringt" wobei Ra die arithmetisch gemittelte Rauigkeit der Fläche ist, um ihr den Zustand einer polierten Fläche zu verleihen; dass man in einem Zug eine vorbestimmten Menge an Lack an der Mitte der Fläche aufbringt, wonach man den Lack durch Zentrifugation verteilt; dass die Zentrifugation des Lackes dargestellt wird bei einer Drehzahl der Linse enthalten zwischen 300 und 1000 U/min; und **dadurch**, dass die Lackschicht erhalten wird durch härten einer flüssigen Lackzusammensetzung, aufweisend eine Viskosität bei 25°C, die enthalten ist zwischen etwa 1000 und 3000 mPas.

2. Verfahren gemäß Anspruch 1, **dadurch gekennzeichnet, dass** die Lackschichtdicke, aufgebracht an der Fläche enthalten ist zwischen etwa 100 Ra und 800 Ra, vorteilhafterweise enthalten zwischen 500 Ra und 800 Ra.

3. Verfahren gemäß einem der Ansprüche 1 oder 2, **dadurch gekennzeichnet, dass** die Fläche eine arithmetisch gemittelte Rauigkeit Ra enthalten zwischen 0,05 und 0,07 $\mu$m aufweist.

4. Verfahren gemäß einem der Ansprüche 1 bis 3, **dadurch gekennzeichnet, dass** die Zentrifugation des Lackes dargestellt wird bei einer Drehzahl der Linse gleich zu etwa 500 U/min.

5. Verfahren gemäß einem der Ansprüche 1 bis 4, **dadurch gekennzeichnet, dass** das Aufbringen der Lackschicht an der Fläche dargestellt wird bei einer Temperatur, enthalten zwischen 25 und 30 °C.

6. Verfahren gemäß einem der Ansprüche 1 bis 5, **dadurch gekennzeichnet, dass** der Lack durch Fotopolymerisation mittels Ultraviolettstrahlung vernetzt wird beziehungsweise ist.

7. Verfahren gemäß Anspruch 6, **dadurch gekennzeichnet, dass** vor der Vernetzung des Lackes man den Lack, verteilt an der Fläche während einer Dauer sich Ruhen oder Setzen lässt, die zwischen 2 bis 4 Minuten erreichen kann.

8. Verfahren gemäß Anspruch 7, **dadurch gekennzeichnet, dass** die Temperatur des Schrittes des Ruhens oder Setzens des Lackes enthalten ist zwischen 25 und 30 °C.

9. Verfahren gemäß einem der Ansprüche 1 bis 8, **dadurch gekennzeichnet, dass** die Lackschicht einen Brechungsindex aufweist, der im Wesentlichen gleich ist zu jenem der Linse mit einer Toleranz von $\pm$ 0,01.

10. Verfahren gemäß einem der vorangegangenen Ansprüche, **dadurch gekennzeichnet, dass** die verwendete flüssige Lackzusammensetzung umfasst:

  - ein Monomer vom Typ Polyacrylat oder Poly(meth)acrylat und gegebenenfalls ein (Meth)acryloxysilan, oder
  - ein Monomer mit Epoxyfunktion(en) oder deren Mischungen.

11. Verfahren gemäß einem der Ansprüche 1 bis 10, **dadurch gekennzeichnet, dass** es den Schritt umfasst des Verwendens einer Lackaufbringvorrichtung, welche eine Linsenstütze (1001) enthält, die gedreht werden kann, sowie einen Arm (1003), der eine Verteilerdüse (1002) des flüssigen Lackes bei Niederdruck enthält, translatorisch vertikalwärts und horizontalwärts mit Bezug auf die Stütze (1001) versetzbar.

12. Verfahren gemäß Anspruch 11, **dadurch gekennzeichnet, dass** die Verteilerdüse (1002) über einen Verteilungsdruck verfügt in der Größenordnung von 0,7 x $10^5$ Pa.

```
┌──────────────┐      ┌──────────────┐
│    DEPOT     │ ───▶ │  ETALEMENT   │
│   VERNIS     │      │   VERNIS     │
└──────────────┘      └──────────────┘
                             │
                             ▼
┌─────────────────────────────────────┐
│                REPOS                 │
└─────────────────────────────────────┘
                   │
                   ▼
┌─────────────────────────────────────┐
│              CUISSON                 │
└─────────────────────────────────────┘
```

Fig.1

```
┌─────────────────────────────────────┐
│                DEPOT                 │
└─────────────────────────────────────┘
                   │
                   ▼
┌─────────────────────────────────────┐
│                REPOS                 │
└─────────────────────────────────────┘
                   │
                   ▼
┌─────────────────────────────────────┐
│              CUISSON                 │
└─────────────────────────────────────┘
```

Fig.2

Fig.3

Fig.4

EP 2 073 044 B1

## RÉFÉRENCES CITÉES DANS LA DESCRIPTION

**Documents brevets cités dans la description**

- US 4417790 A

- WO 9855261 A